# EUROPÄISCHE PATENTSCHRIFT

(11) **EP 2 268 960 B1**
(45) Veröffentlichungstag und Bekanntmachung des Hinweises auf die Patenterteilung: **16.11.2011**
(21) Anmeldenummer: 09737528.1
(22) Anmeldetag: 22.06.2009
(51) Int. Cl.: F16L 41/02, F16L 47/32, F16L 55/179, F16L 55/165, F16L 11/08

(54) **SCHLAUCH**
TUBE
TUYAU

(30) Priorität: 29.04.2008 AT 6742008
(43) Veröffentlichungstag der Anmeldung: 05.01.2011
(73) Patentinhaber: Kübel, Johann, 3072 Kasten (AT)
(72) Erfinder: Kübel, Johann, 3072 Kasten (AT)
(74) Vertreter: Wildhack & Jellinek
(86) Internationale Anmeldenummer: PCT/AT2009/000249
(87) Internationale Veröffentlichungsnummer: WO 2009/132376

(56) Entgegenhaltungen:
- EP-A- 0 351 570
- DE-A1- 4 238 982
- FR-A- 1 159 906
- US-A- 2 973 783

## Beschreibung

Die Erfindung betrifft einen Schlauch gemäß dem Oberbegriff des Anspruchs 1 sowie ein Verfahren gemäß dem Oberbegriff des Anspruchs 11.

Derartige Schläuche werden insbesondere zur Sanierung von Rohren Abwässern benötigt bzw. angewendet.

Als Schlauch wird ein Hohlkörper mit zwei Öffnungen verstanden, wobei im wesentlichen eine Längsrichtung vorgegeben ist. In Schnitten senkrecht zu dieser Längsrichtung weist der Schlauch einen weitestgehend gleichförmigen, kreisringförmigen, Querschnitt, insbesondere mit geometrisch ähnlichen Querschnittsflächen, auf. Durch die große Elastizität des erfindungsgemäßen Schlauchs kann die Form natürlich auch von der Kreisringform abweichen und etwa in die Form eines elliptischen Rings oder eines rechteckförmigen Rings gebracht werden. Dies ist insbesondere bei ausgehärteten und an ein vorgegebenes Rohr angepassten Schläuchen der Fall. Als Hohlkegel und Hohlzylinder werden im folgenden solche mit beliebigem Querschnitt also beispielsweise auch elliptische Hohlkegel und elliptische Hohlzylinder verstanden.

Insbesondere hat der Schlauch die Form eines Hohlkegelstumpfs oder eines Hohlzylinders. Die Wandstärke ist vorzugsweise konstant über den gesamten Schlauch, unabhängig von der Querschnittsfläche. Der Schlauch kann auch als zusammengesetzter geometrischer Körper gebildet sein, welcher aus einer Vielzahl von Hohlkegelstümpfen auch mit unterschiedlichen Durchmessern und Steigungen und/oder Hohlzylindern besteht. Auch kann die Steigung und/oder der Durchmesser eines hohlkegelförmigen Schlauches kontinuierlich variieren, wodurch sich eine geometrisch glatte und/oder knickfreie Oberfläche ergibt.

Als Hutze oder hutkrempenförmig wird eine Form bezeichnet, welche sich in ihrem Durchmesser, bei insbesondere gleichbleibender Wandstärke, bei steigender Steigung, also nach außen gekrümmt, insbesondere trompetenförmig, erweitert. In ihrem einen Endbereich verlaufen die Wände der Hutze annähernd parallel oder sich nur geringfügig erweiternd zur Längsrichtung. Im gegenüberliegenden Endbereich verlaufen die Wände der Hutze beinahe im rechten Winkel, also mit sehr großer Steigung, zur Längsrichtung.

US 2 973 783 zeigt einen Schlauch gemäß dem Oberbegriff des Anspruchs 1. Ein wesentlicher Nachteil von Schläuchen nach dem Stand der Technik besteht darin, dass aufgrund des materialbedingten Schrumpfens des Schlauches während der Aushärtung eine Anpassung an das vorgegebene Rohr oft nur mit großem Druck realisierbar ist und es insbesondere bei Schläuchen oder Linern mit großen Ausdehnungen aufgrund der Schrumpfung des Schlauches zu Verwerfungen bzw. Ablösungen kommt.

Die Aufgabe der Erfindung bestand darin, die genannten Probleme zu lösen und einen Schlauch zu schaffen, welcher einfach und kostengünstig herzustellen ist, welcher in seiner Gestalt einfach an eine bestehende Rohrkonfiguration anpassbar ist, an dieser gut haftet und im ausgehärteten Zustand an der Innenoberfläche des auszukleidenden Rohres passgenau anliegt und eine hohe Festigkeit aufweist.

Die Erfindung löst die Aufgabe mit den Merkmalen des Kennzeichens des Anspruchs 1.

Ein wesentlicher Vorteil eines erfindungsgemäßen Schlauches besteht darin, dass der Schlauch einfach an das ihn umgebende Rohr anpassbar und nach der Aushärtung passgenau an der Oberfläche des Rohres anliegt bzw. aufliegt. Aufgrund der Eigenschaft der UV-Aushärtbarkeit ist das Einbringen des Schlauches in den Rohrbereich in kurzer Zeit durchzuführen, wobei eine Unterbrechung des mit dem Schlauch beaufschlagten Rohrbereichs lediglich im Minutenbereich liegt. Die Glasfaserröhrchen verhindern wirksam das Schrumpfen des im gedehnten Zustand an die Innenfläche des Rohrs angebrachten Schlauches.

Mit den Merkmalen des Anspruchs 2 können die im Inneren des Schlauches auftretenden Spannungen verringert werden.

Ein Schlauch gemäß Anspruch 2 weist verbesserte Hafteigenschaften an der Innenseite eines Rohrs auf und schrumpft nicht.

Ein Schlauch gemäß Anspruch 3 kann besonders einfach in ein Rohr eingebracht werden und bietet über seinen Umfang gleichbleibende Festigkeit.

Ein Schlauch gemäß Anspruch 3 ist besonders beständig und verhindert das Verstopfen des Rohrabschnitts, in welchen der Schlauch eingebracht ist. Im Gegensatz zu Schläuchen nach dem Stand der Technik ist ein Schlauch mit den Merkmalen dieses und frei von Nähten und Überlappungsbereichen. Dadurch wird eine alterungsbedingte Zerstörung der Nähte weitestgehend vermieden.

Die Merkmale des Anspruchs 3 ermöglichen die Bildung glatter Oberflächen beim Aneinanderfügen mehrerer Schläuche.

Mit den Merkmalen des Anspruchs 3 kann das Einbringen eines Schlauches in ein Rohr erleichtert werden. Ferner vermeiden die Merkmale des Anspruchs 3 die Zerstörung des Schlauches während des Einbringens in das Rohr.

Ein Schlauch gemäß Anspruch 3 kann besonders leicht an die innere Oberfläche eines Rohrs angepasst werden.

Mit einem Schlauch oder einer Hutze gemäß Anspruch 3 können T- und Y-Rohreinlagestücke gebildet werden.

Mit den Merkmalen des Anspruchs 4 wird die Struktur eines T-förmigen oder Y-förmigen Rohreinlagestücks im Bereich der Verbindung dieser Elemente verstärkt und eine stabile Verbindung bzw. Auskleidung erreicht.

Mit den Merkmalen des Anspruchs 5 wird die Haftkraft des T-förmigen Rohreinlagestücks an dem in das Hauptrohr einmündenden weiteren Rohr verbessert.

Ein Rohreinlagestück gemäß Anspruch 6 ist besonders einfach herzustellen. Ferner verhindern die Merkmale des Anspruchs 6 mechanische Spannungen in den Übergangsbereichen.

Die Merkmale des Anspruchs 7 verbessern das Anhaften eines T-förmigen Roheinlagestücks in Inneren einer Rohrabzweigung.

Mit den Merkmalen des Anspruchs 7 wird die Fertigung eines T-förmigen oder Y-förmigen Rohreinlagestücken vereinfacht. Ferner wird eine verbesserte Geschmeidigkeit und ein verbessertes Anpassungsverhalten im Bereich des Einbringens des weiteren Rohrs in das Hauptrohr bewirkt.

Ein Rohreinlagestück nach Anspruch 7 ist besonders einfach herzustellen.

Mit dem Merkmal des Anspruchs 7 wird eine verbesserte Anpassung des Rohreinlagestücks oder des Schlauches an ein Rohr, insbesondere im Einmündungsbereich, bewirkt. Ferner wird eine verbesserte Anpassung eines T- oder Y-förmigen Schlauches an eine T- oder Y-förmige Rohreinmündung bewirkt.

Mit dem Merkmal des Anspruchs 8 können Rohreinlagestücke mit dünnen Wanddicken gefertigt werden.

Ein Rohreinlagestück gemäß Anspruch 8 ist im ausgehärteten Zustand besonders formstabil.

Mit den Merkmalen des Anspruchs 8 kann wird die Stabilität des Rohreinlagestücks erhöht.

Die Merkmale des Anspruchs 8 verringern die Materialverwerfung bzw. Schrumpfung eines Rohreinlagestücks während des Aushärtens.

Ein Rohreinlagestück mit den Merkmalen des Anspruchs 8 weist besonders hohe Zugfestigkeit gegenüber entlang des Umfangs des Rohrs wirkenden Kräften auf.

Die Merkmale des Anspruchs 8 erhöhen die Stabilität eines ausgehärteten Rohreinlagestücks gegenüber Torsion und gegenüber axialen Spannungen.

Mit den Merkmalen des Anspruchs 8 wird die Fertigung eines Rohreinlagestücks vereinfacht und eine besonders gute Anpassung des Rohreinlagestücks an ein Rohr ermöglicht.

Mit den Merkmalen des Anspruchs 8 kann das Aushärten des Rohreinlagestücks besonders einfach, schnell und zuverlässig durchgeführt werden.

Bei einem Rohr mit einem Rohreinlagestück mit den Merkmalen des Anspruchs 9 und 10 wird das Eindringen von flüssigen Medien von außen im Bereich von Schadstellen weitestgehend vermieden.

Mit einem Verfahren gemäß Anspruch 11 kann ein Rohreinlagestück in ein Rohr schnell und einfach eingebracht werden.

Mit den Merkmalen des Anspruchs 12 ist eine besonders gute Anpassung des Rohreinlagestücks an das Rohr möglich.
Figur 1 zeigt schematisch eine Schnittansicht eines Rohres mit eingebrachtem Schlauch.
Figur 2 zeigt mögliche Längenverteilungen der Glasfasern.
Figur 3 zeigt schematisch ein Glasfaserröhrchen 2 im Schlauch.
Figur 4 zeigt ein T-förmiges Rohreinlagestück.
Figur 5 zeigt eine Schnittansicht eines T-förmigen Rohrabschnitts.
Figur 5a zeigt eine Schnittansicht eines Y-förmigen Rohrabschnitts.
Figur 6 zeigt schematisch einen in ein T-förmiges Rohrstück eingebrachten T-förmigen Schlauch.
Figur 6a zeigt schematisch einen in ein Y-förmiges Rohrstück eingebrachten T-förmigen Schlauch.

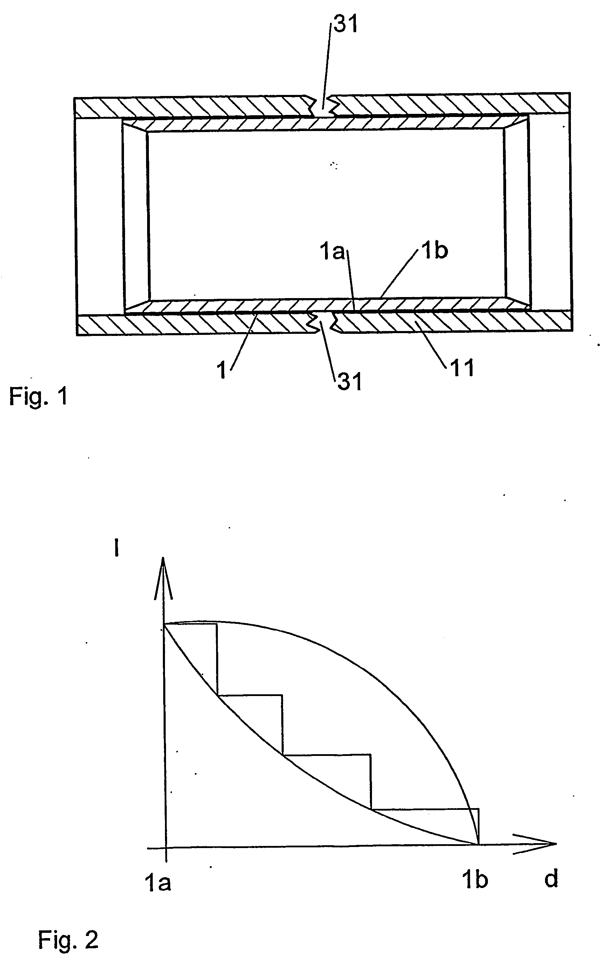

Fig. 1 zeigt einen Teilbereich einer Rohrleitung bzw. eines Rohres 11, welches an seiner Oberseite bzw. seiner Unterseite eine Schadstelle 31 aufweist. Um das Ausfließen von durch das Rohr 11 hindurchgeführten Fluiden zu vermeiden bzw. um das Rohr 11 abzudichten, ist im Bereich der Schadstelle 31 ein Kunststoffschlauch oder Schlauch 1 eingebracht.

Ein Schlauch 1 ist ein mit Harz 3, insbesondere UV-aushärtbarem Harz, ausgebildeter Schlauch, welcher zunächst eine zähflüssige bis elastisch verformbare, weiche Konsistenz aufweist. Durch die Aushärtung des Schlauches 1 mittels Beleuchtung mit UV-Strahlung kommt es zu einer Schrumpfung des Schlauches 1, welche die Passgenauigkeit des Schlauches 1 beeinflusst. Die den Schlauch 1 bildende Masse umfasst eine gewebeartige Struktur mit Glasfaserröhrchen 2, welche in das Harz 3 des Schlauches 1 eingebettet ist, sowie eben dieses Harz 3. Der Schlauch weist über seinen Umfang und seine Längserstreckung eine gleichmäßige Dicke auf.

Der wesentliche Vorteil eines erfindungsgemäßen Schlauches 1 gegenüber einem Schlauch 1 gemäß dem Stand der Technik ergibt sich daraus, dass die Länge der in den Schlauch 1 eingebrachten Glasfaserröhrchen 2 über die Dicke der Wandung des Schlauches 1 hinweg variiert wird und die längeren Glasfaserröhrchen in jenem Bereich liegen, welcher mit dem abzudichtenden Objekt in Kontakt steht. In diesem Fall liegen die längeren Glasfaserröhrchen 2 am äußeren Mantel des Schlauches 1 an.

Der Schlauch 1 kann invertiert werden, wobei in diesem Fall die kürzeren Glasfaserröhrchen 2 an der äußeren Mantelfläche anliegen. Für das Einbringen in ein Rohr ist jedoch ausschließlich die Konfiguration erforderlich, bei welcher die längeren Glasfaserröhrchen 2 außen anliegen. Vor dem Einbringen muss daher der Schlauch 1 wieder in diese Konfiguration gebracht werden. Die Fläche, an der die längeren Glasfaserröhrchen 2 anliegen, wird mit der Innenfläche des Rohrs in Kontakt gebracht.

Fig. 2 stellt drei mögliche Verläufe der Längen der Glasfaserröhrchen 2 dar. An der äußeren Mantelfläche 1a des Schlauches 1 ist die Länge der Glasfaserröhrchen 2 am größten. An der inneren Mantelfläche 1b des Schlauches 1 ist die Länge der Glasfaserröhrchen 2 am kleinsten.

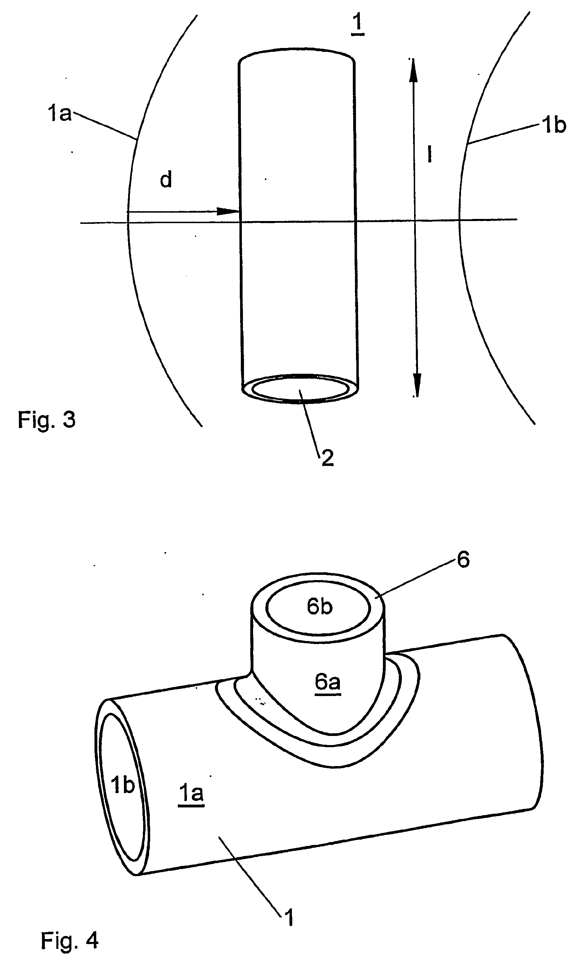

Im Zwischenbereich zwischen den Mantelflächen 1a, 1b des Schlauches 1 weist die Längenverteilung der Glasfaserröhrchen 2 einen inhomogenen, insbesondere monotonen, Verlauf auf. Am einer der beiden Mantelflächen 1a, 1b, insbesondere an der äußeren Mantelfläche 1a, des Schlauches 1 liegen hierbei die längeren Glasfaserröhrchen 2 an, an der jeweils gegenüberliegenden Mantelfläche, insbesondere der inneren Mantelfläche 1b, liegen die kürzeren Glasfaserröhrchen 2 an. Die Verteilung der Länge der Glasfaserröhrchen 2 ist inhomogen und insbesondere monoton, d. h. auf einer gedachten Schnittlinie 1-1 (Fig. 3) zwischen der äußeren Mantelfläche 1a und der inneren Mantelfläche 1b nimmt die Länge 1 der Glasfaserröhrchen 2 in Richtung der äußeren Mantelfläche 1a zu, in Richtung der inneren Mantelfläche 1 b ab.

Eine besonders hohe Passgenauigkeit des Schlauches 1 am Rohr 11 ergibt sich, da die längeren Glasfaserröhrchen 2 im Außenbereich des Schlauches 1 schrumpfungsbedingten Verformungskräften größeren Widerstand entgegenbringen als die kürzeren Glasfaserröhrchen 2 im Innenbereich des Schlauches 1. Daher treten die Materialverformungen vorwiegend im Innenbereich des Schlauches 1 auf, der Außenbereich des Schlauches unterliegt jedoch nur sehr geringen Verformungen.

Da bei homogener Verteilung der Längen der Glasfaserröhrchen 2 die aushärtungsbedingten Verformungen des Schlauches 1 gleichmäßig über dessen Volumen verteilt sind und somit auch direkt an der äußeren Mantelfläche 1a des Schlauches 1 Verwerfungen bzw. Schrumpfungen auftreten können, kann eine genaue Anpassung des Schlauches 1 an das Rohr 11 nicht erfolgten. Bei einem erfindungsgemäßen Schlauch 1 ist der Bereich der äußeren Mantelfläche 1b des Schlauches 1 aufgrund der längeren Glasfaserröhrchen 2 weniger stark den Verformungsprozessen unterworfen, wodurch eine genauere Anpassung des Schlauches 1 an das Rohr 11 erreicht werden kann.

Fig. 3 zeigt schematisch eines der Glasfaserröhrchen 2, welche sich im Schlauch 1 befinden. Die Länge d bezeichnet den Abstand des Glasfaserröhrchen 2 von der äußeren Mantelfläche 1a des Schlauches 1. Die Länge 1 bezeichnet die Länge des Glasfaserröhrchen 2.

Fertigungsbedingt können verschiedene Verteilungen der Längen der Glasfaserröhrchen 2 erzielt werden. Wesentlich ist jedoch, dass die Länge der Glasfaserröhrchen 2 an den beiden Mantelflächen 1a, 1b des Schlauches 1 vorgegebene und unterschiedliche Werte aufweist, wobei im Bereich zwischen den Mantelflächen 1a und 1b des Schlauches 1 die Längenverteilung der Glasfaserröhrchen 2 inhomogen und insbesondere monoton verläuft. Fig. 2 zeigt drei mögliche Verläufe der Längen der Glasfaserröhrchen 2, darunter einen treppenartigen, unstetigen Verlauf sowie zwei stetige Verläufe.

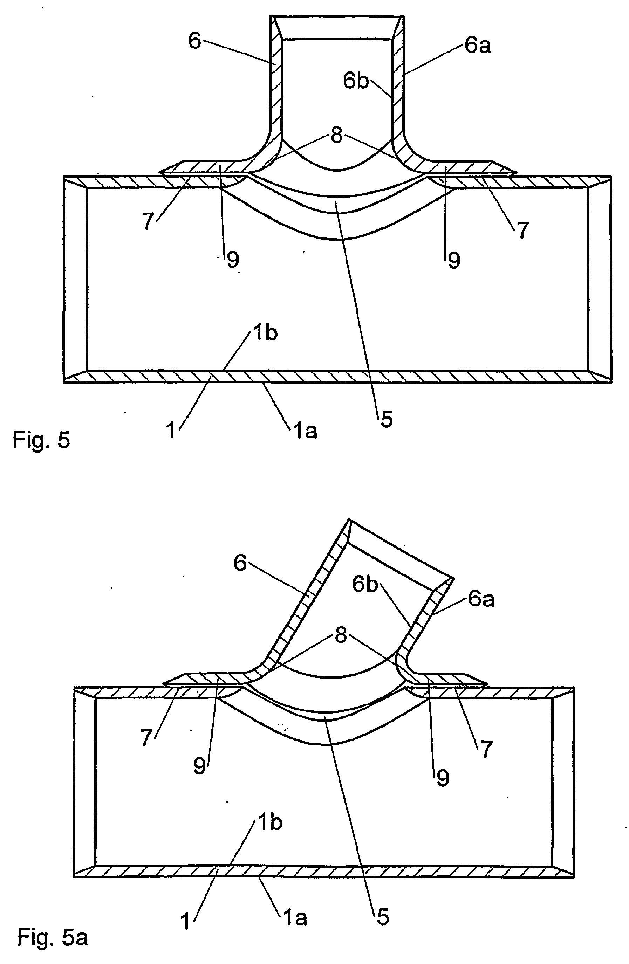

Fig. 5 zeigt eine Hutze 6, nämlich einen Schlauch mit einem hutkrempenförmigen Endbereich. Hierbei ist zumindest eine Öffnung der Hutze 6 in ihrem Endbereich erweitert und weist in diesem Bereich der Erweiterung die Form einer Hutkrempe auf. Eine Hutze 6 eignet sich besonders zum Fertigen des abzweigenden Elements eines T-förmigen oder Y-förmigen Rohreinlagestücks. Der Endbereich 9, in welchem die Hutze 6 die hutkrempenförmige Erweiterung aufweist, kann aufgrund seiner hohen Elastizität an die Oberfläche des Schlauches 1 angepasst werden und bietet einen dichten Abschluss zwischen dem Schlauch 1 und der Hutze 6.

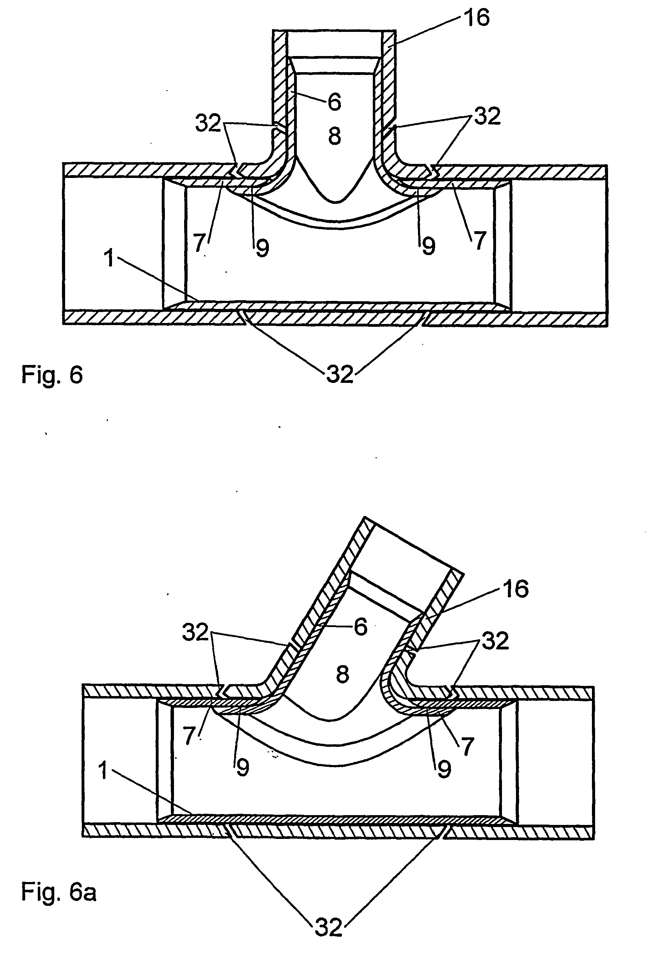

Fig. 4 zeigt ein T-förmiges Rohreinlagestück, mit einem Schlauch 1, aus welchem ein Teil des Mantels des Schlauches 1 ausgenommen ist und einer Hutze 6. Am Schlauch 1 wird durch Ausschneiden oder Stanzen eine Ausnehmung 5 ausgebildet. Die Hutze 6 wird in diese Ausnehmung 5 eingebracht oder an der äußeren Mantelfläche 1b des Schlauches 1 die Ausnehmung 5 umgebend und schlüssig angelegt, wobei der hutkrempenförmige Teil der Hutze 6 am inneren oder äußeren Mantel des Schlauches 1 anliegt. Vorteilhafterweise kann vorgesehen werden, dass der Schlauch 1 und die Hutze 6 miteinander verklebt werden. Die Ausnehmung 5 weist dabei eine Form auf, welche aus Richtung der einmündenden Hutze 6 betrachtet kreisförmig oder ellipsenförmig ist oder sonst der Querschnittsform des weiteren Schlauches 6 entspricht. Um die Fertigung des Schlauches 1 bzw. der Hutze 6 zu erleichtern, kann vorgesehen werden, dass die Verteilung der Längen der Glasfaserröhrchen 2 im Schlauch 1 und der Hutze 6 ident ist. Ein mittels eines Schlauches 1 und einer Hutze 6 gebildetes Rohreinlagestück 1 kann zur Abdichtung von schadhaften Rohrstücken 32 im Bereich einer Rohrabzweigung eingesetzt werden. Obwohl es sich bei dem Rohreinlagestück um ein T-förmiges Stück handelt, wobei der Schlauch 1 und die Hutze 6 in ihrer Längsausdehnung im rechten Winkel zueinander stehen, können auch Y-fömrige Rohrstücke mittels eines derartigen T-förmigen Rohreinlagestücks ausgekleidet werden, wie in Fig. 5a und 6a dargestellt. Das Rohrsystem umfasst hierbei ein Rohr 11 sowie ein weiteres Rohr 16, welches insbesondere rechtwinkelig in das Rohr 11 einmündet.

Fig. 5 zeigt eine Schnittansicht eines T-förmigen Rohreinlagestücks. Das in den Schlauch 1 eingebrachte Ende 9 der Hutze 6 ist in seinem Radius erweitert bzw. nach außen gekrümmt bzw. abgebogen und liegt mit seiner inneren Mantelfläche 6b an der äußeren Mantelfläche 1b des Schlauches 1 an. Das am Schlauch 1 anliegende Ende 9 der Hutze 6 ist mit dem Schlauch 1 mittels eines UV- oder wärmeaushärtbaren Harzes 7 verbunden bzw. verklebt. Die Enden der Hutze 6 bzw. der Rand der Ausnehmung 5 sind hierbei abgerundet, wobei sich die Dicke des Mantels des Schlauches 1 und der Hutze 6 graduell verringert.

Eine weitere Ausführungsform des Rohreinlagestücks besteht darin, dass ein Teil des Mantels des Schlauches 1 ausgenommen ist und eine Hutze 6 von außen auf bzw. um die hierbei entstandene Ausnehmung 5 bündig, insbesondere mit einem wärmeaushärtbaren Harz 7 aufgeklebt ist. Die Ausnehmung 5 ist dabei derart gestaltet, dass ihre Berandung der Schnittfläche zweier, insbesondere normal aufeinander stehender, Kreiszylinder, vorzugsweise mit schneidenden Zylinderachsen, entspricht. Eine derartige Ausführungsform kann analog zu dem in Fig. 5 dargestellten Rohreinlagestück verwendet werden. Hierbei liegt die äußere Mantelfläche 1a des Schlauches 1 an der inneren Mantelfläche 6b der Hutze 6 an.

In diesem Fall wird die innere Mantelfläche 6b der Hutze 6 mit der äußeren Mantelfläche 1a des Schlauches 1 verklebt.

Fig. 6 zeigt eine Schnittansicht eines T-förmigen Rohreinlagestücks, welches in einen T-förmigen Rohrabschnitt eingebracht ist. Der T-förmige Rohrabschnitt umfasst dabei ein Rohr 11, in welches ein weiteres Rohr 16 im rechten Winkel einmündet. Dieser Rohrabschnitt weist einige Schadstellen 32 am Rohr 11 sowie am weiteren Rohr 16 auf. Ferner ist das T-förmige Rohreinlagestück in den T-förmigen Rohrabschnitt eingebracht, wobei die Hutze 6 in das weitere Rohr 16 eingebracht ist und der Schlauch 1 in das Rohr 1 eingebracht ist. Die äußere Mantelfläche 6a der Hutze 6 ist an der inneren Mantelfläche des weiteren Rohres 16 angelegt. Dem weiteren Rohr 16 ist die äußere Mantelfläche 6a der Hutze 6 zugewandt, an welcher die längeren Glasfaserröhrchen 2 angeordnet sind. Im Zwischenbereich zwischen dem Schlauch 1 und der Hutze 6 ist wärmeaushärtbares Harz 7 eingebracht und ausgehärtet. Die Hutze 6 weist vorteilhafterweise im Bereich 8 ihrer Krümmung eine größere Dicke, vorzugsweise die doppelte Dicke im Verhältnis zur Wandstärke in dem Endbereich der Hutze 6 auf, da gerade im Bereich des Einmündens des weiteren Rohrs 16 in das Rohr 11 besonders große mechanische Beanspruchungen auf das in das Rohr 11 bzw. das weitere Rohr 16 eingebrachte Rohreinlagestück wirken.

In Fig. 5a ist eine Schnittansicht eines Y-formigen Rohreinlagestücks dargestellt. In Fig. 6a ist eine Schnittansicht eines Y-förmigen Rohrabschnitts mit einem eingebrachten Rohreinlagestücks dargestellt. Die wesentlichen Unterschiede zwischen den Fig. 5 und Fig. 5a bzw. Fig. 6 und Fig. 6a liegen im Winkel der Hutze 6 und des Schlauches 1 zueinander. Durch die hohe Elastizität des die Hutze 6 und den Schlauch 1 bildenden Materials kann ein einziges, insbesondere T-förmiges, Rohreinlagestück für beliebige Winkel verwendet werden.

Sofern nicht anders angegeben, gelten die folgenden Dimensionierungen sowohl für den Schlauch 1 als auch für die Hutze 6.

Besonders gute Aushärteeigenschaften ergeben sich, wenn die Wandstärke oder Dicke des Schlauches 1 oder der Hutze 6 im Bereich von 0,5% bis 5% des Durchmessers des Schlauches 1 liegt. Innerhalb dieses Bereichs werden das rasche Aushärten des das Rohreinlagestück 1 bildenden Harzes 3 sowie eine hohe Passgenauigkeit des Schlauches 1 sowie der Hutze 6 am Rohr 11 bzw. am Rohr 16 erreicht.

Um eine besonders verwindungsstabile Oberfläche der äußeren Mantelfläche des Schlauches 1 bzw. der Hutze 6 zu erhalten, werden die Längen der Glasfaserröhrchen 2 in einem Bereich von 1 bis 10 cm gewählt. Um ein rasches Aushärten des Harzes 3 zu erzielen, wird die Dicke des Mantels des Schlauches 1 bzw. der Hutze 6 im Bereich zwischen 0,5 bis 0,8 cm gewählt.

Bei größeren Rohrdurchmessern bzw. Schlauchdurchmessern sind aus Gründen der Stabilität bzw, der Dichtheit des Rohreinlagestücks an den betreffenden Schadstellen 31, 32 andere Dimensionierungen erforderlich. Liegt der Durchmesser des Schlauches 1 oder der Hutze 6 über einem Meter, so kann die Dicke des Schlauches 1 bis zu 5% des Durchmessers des Schlauches 1 bzw. der Hutze 6 betragen. Ferner kann die Länge der Glasfaserröhrchen 2 an den Durchmesser des Schlauches 1 angepasst werden, um dessen Stabilität gerade bei großen Durchmessern zu erhöhen. In diesem Fall können die Längen der Glasfaserröhrchen 2 im Bereich von 2% bis 5%, vorzugsweise 3% bis 3,5%, des Durchmessers des Schlauches 1 gewählt werden. Um eine besonders hohe Verwindungssteifigkeit zu erzielen, ist ein besonders großes Verhältnis der Länge der Glasfaserröhrchen 2 an den beiden gegenüberliegenden Mantelflächen 1a, 1b des Schlauches 1 erforderlich. Um jedoch das Einbringen des Schlauches 1 im Rohrbereich zu erleichtern und den Andrückvorgang einfach durchführbar zu machen, ist es vorteilhaft, das Verhältnis der Längen der Glasfaserröhrchen 2 an den beiden gegenüberliegenden Mantelflächen 1a, 1b des Schlauches 1 nicht zu groß zu wählen. Für den praktischen Anwendungsfall ergeben sich Verhältnisse zwischen 1:4 und 1:2 oder 2:1 bis 4:1. An der äußeren Mantelfläche 1a sind jeweils die längeren Glasfaserröhrchen 2 angeordnet.

Wird an einem Schlauch 1 eine Hutze 6 angebracht, so bilden diese eine gemeinsame Oberfläche bzw. Mantelwand eines Rohreinlagestücks. Die Längenverteilung der Glasfaserröhrchen 2 des Schlauches 1 und der Hutze 6 kann vorzugsweise gleich gewählt werden. Der Schlauch 1 und die Hutze 6 werden so zusammengesetzt, dass die Oberflächenbereiche mit den jeweils längeren Glasfaserröhrchen 2 eine gemeinsame Oberfläche bilden und diejenigen Oberflächenbereiche, an denen kürzere Glasfaserröhrchen 2 anliegen, den inneren Oberflächenbereich bilden.

Um eine besonders hohe Stabilität und Elastizität zu erzielen, werden die Glasfaserröhrchen 2 ungeordnet in das Harz 3 eingebettet, sodass diese zwar annähernd parallel zu den Mantelflächen 1a, 1b, 6a, 6b des Schlauches 1 bzw. der Hutze 6 ausgebildet bzw. angeordnet sind, jedoch innerhalb dieser Mantelfläche die Anordnung bzw. Ausrichtung und gegenseitige Lage der Glasfaserröhrchen 2 beliebig ist. Der Neigungswinkel der Glasfaserröhrchen 2 gegenüber den Mantelflächen 1a, 1b, 6a, 6b ist dabei vorzugsweise kleiner als 10°. Um die Gesamtstabilität des Schlauches 1 zu verbessern, ist es vorteilhaft, den Massenanteil bzw. den Volumsanteil der Glasfaserröhrchen 2 im Schlauch 1 homogen zu verteilen und lediglich die Länge der einzelnen Glasfaserröhrchen 2 zu variieren.

Das Einbringen des Schlauches 1 oder des Rohreinlagestücks erfolgt üblicherweise mittels eines Roboters, welcher das Rohreinlagestück im Rohr 11 bis zur Schadstelle 31 führt und anschließend das Rohreinlagestück, insbesondere durch Aufblasen eines Ballons, von innen mit Druck beaufschlagt und gegen die Innenwand des Rohres 11 drückt. Vor dem Einbringen wird zur Verringerung des Widerstands die Hutze 6 in das Rohreinlagestück bzw. in der Schlauch 1 eingestülpt. Dabei wird der dem Schlauch 1 ferne Endbereich der Hutze 6 durch die Hutze 6 hindurch geführt und durch die Ausnehmung 5 in den Schlauch 1 eingebracht. Ein derartiges Vorgehen wird auch als Invertieren des Rohreinlagestücks bezeichnet. Dieser Schritt entfällt beim Einbringen eines Schlauches 1 ohne aufgesetzte Hutze 6. Durch den verringerten Platzbedarf des Rohreinlagestücks wird der Reibungswiderstand des Rohreinlagestücks deutlich reduziert, was das Einbringen wesentlich vereinfacht.

Zum Einbringen des Rohreinlagestücks in das Rohr 11 wird üblicherweise ein Roboter verwendet. Dieser Roboter weist eine Einheit zur Bewegung entlang des Rohrs 11, eine Einheit zum Festhalten und Führen des Rohreinlagestücks, eine Bildaufnahmeeinheit oder Kamera, eine Druckbeaufschlagungseinheit sowie einen UV-Strahler auf. Ferner ist der Roboter ferngesteuert und liefert die mittels der Kamera aufgezeichneten Daten an eine externe Fernsteuerung außerhalb des Rohrs 11. Das Rohreinlagestück wird im Rohr 11 verschoben, bis die endgültige Position des Rohreinlagestücks aufgefunden worden ist. Das genaue Auffinden des Bestimmungsorts des Rohreinlagestücks wird mittels der Kamera ermöglicht.

Nach dem Erreichen des Bestimmungsorts im Rohr wird eine Druckbeaufschlagungseinheit gestartet, welche das noch nicht ausgehärtete Rohreinlagestück fest mit dem Rohr 11, gegebenenfalls mit dem weiteren einmündenden Rohr 16 verpresst. Anschließend wird der UV-Strahler eingeschaltet, wodurch das Rohreinlagestück ausgehärtet wird, wobei diejenige Mantelfläche des Rohreinlagestücks, des Schlauches 1 und der Hutze 6 an der Innenseite des jeweiligen Rohrs anliegend gehalten werden, an welchen die längeren Glasfaserröhrchen liegen.

Das Bestrahlen mit UV-Licht bewirkt das Aushärten des den Schlauch 1 bildenden Harzes 3. Ist die Druckbeaufschlagungseinheit als Ballon ausgeführt, so ist dieser Ballon aus UV durchlässigem gebildet. So kann UV-Licht durch den Ballon hindurch auf das Rohreinlagestück einwirken. Ferner kann eine zusätzliche Lichtquelle für sichtbares Licht am Roboter zur Beleuchtung des von der Kamera aufzunehmenden Bildbereichs angeordnet sein.

Durch die erfindungsgemäße Ausgestaltung des Schlauches 1, der Hutze 6 bzw. des Rohreinlagestücks wird eine hohe Passgenauigkeit erreicht und mechanische Verformungen während des Aushärtens werden vermieden.

## Patentansprüche

1. Schlauch mit schlauchförmigem Mantel gebildet mit einem, insbesondere UV-aushärtbaren Harz (3), vorzugsweise Vinylester oder Polyester wobei in das den Schlauch (1) bildende Harz (3) abagelängte Glasfaserröhrchen (2) eingebettet sind, **dadurch gekennzeichnet,**
- **dass** die Länge der Glasfaserröhrchen (2) an den beiden Mantelflächen (1a, 1b) des Schlauches (1) vorgegebene und voneinander unterschiedliche Werte aufweist.

2. Schlauch nach Anspruch 1, **dadurch gekennzeichnet,**
- **dass** im Zwischenbereich zwischen den Mantelflächen (1a, 1b) des Schlauches (1) die Längenverteilung der Glasfaserröhrchen (2) einen inhomogenen, insbesondere monotonen, Verlauf aufweist, und/oder
- **dass** die Glasfaserröhrchen (2) im Bereich der äußeren Mantelfläche (1a) länger sind als im Bereich der inneren Mantelfläche (1b).

3. Schlauch gemäß Anspruch 1 oder 2, **dadurch gekennzeichnet, dass** der Mantel des Schlauches (1) über seinen Umfang und/oder seine Längserstreckung eine gleichmäßige Dicke aufweist, und/oder
- dass der Schlauch (1) aus einem Stück gebildet ist, und/oder
- dass die Abschlusskanten des Schlauches (1) abgerundet sind, und/oder
- dass sich die Dicke des Mantels des Schlauches (1) an zumindest einem Ende bzw. im Endkantenbereich, insbesondere graduell, verringert, und/oder
- dass das den Schlauch (1) bildende Harz (3) teilweise ausgehärtet ist und eine gummiartige Konsistenz aufweist, und/oder
- dass die das den Schlauch (1) bildende Harz (3) dehnbar ist und der Schlauch (1) auf bis zu 170% seiner Originalgröße dehnbar ist, und/oder
- dass zur Ausbildung eines Anschlussstücks zumindest eine Öffnung des schlauchförmigen Mantels erweitert ist, und der Bereich dieser Erweiterung hutkrempenförmig bzw. sich nach außen erweiternd ausgebildet ist.

4. Rohreinlagestück mit einem Schlauch (1) nach einem der Ansprüche 1 bis 3 und einer Hutze (6), nämlich einem Schlauch mit hutkrempenförmigem Endbereich gemäß Anspruch 9, **dadurch gekennzeichnet, dass**
- die Hutze (6) mit dem Schlauch (1) verbunden ist, wobei
- der hutkrempenförmige Teil der Hutze (6), insbesondere vollflächig und/oder weitgehend kanten- und stoßfrei, auf dem äußeren oder inneren Mantel des Schlauches (1) anliegt,
- der schlauchförmige Bereich der Hutze (6) in einem vorgegebenen, insbesondere rechten, Winkel zum Schlauch (1) steht, und
- derjenige Bereich des Schlauches (1) ausgenommen oder ausgeschnitten ist, welcher vom Kontaktbereich zwischen der Hutze (6) und dem Schlauch (1) umgeben ist, bzw. der Öffnung der Hutze (6) entspricht.

5. Rohreinlagestück gemäß Anspruch 4, **dadurch gekennzeichnet,**
- **dass** der in seinem Radius erweiterte Endbereich der Hutze mit dem Schlauch (1) in Kontakt steht, wobei insbesondere die äußere Mantelfläche (6a) des hutkrempenförmigen Teils der Hutze (6) an der inneren Mantelfläche (1b) des Schlauches (1) anliegt, und
- **dass** der mit dem Schlauch (1) in Kontakt stehende Endbereich der Hutze (6), insbesondere mittels eines, vorzugsweise wärmeaushärtbaren, Harzes (7), mit dem Schlauch (1) verbunden bzw. verklebt ist.

6. Rohreinlagestück gemäß Anspruch 4 oder 5, **dadurch gekennzeichnet,**
- **dass** die Enden der Mantelflächen der Hutze (6), bzw. die Begrenzungen der Ausnehmung (5) des Schlauches (1) eine abnehmende Wandstärke aufweisen bzw. ihre Dicke im Verlauf des Abschlussbereichs geringer wird, sodass die Oberfläche des Rohreinlagestücks annähernd glatt und erhebungsfrei verläuft.

7. Rohreinlagestück gemäß einem der Ansprüche 4 bis 6, **dadurch gekennzeichnet,**
- **dass** diejenige Mantelfläche des Schlauches (1), an welcher die kürzeren Glasfaserröhrchen (2) angeordnet sind, mit derjenigen Mantelfläche der Hutze (6), an welcher die längeren Glasfaserröhrchen (2) angeordnet sind, verbunden ist bzw. in Kontakt gebracht ist, und/oder
- **dass** diejenige Mantelfläche des Schlauches (1), an welcher die längeren Glasfaserröhrchen (2) angeordnet sind, mit derjenigen Mantelfläche (6a, 6b) der Hutze (6), an welcher die kürzeren Glasfaserröhrchen (2) angeordnet sind, verbunden ist bzw. in Kontakt gebracht ist, und/oder
- **dass** die Länge der Glasfaserröhrchen (2) an der Innenseite der Hutze (6) der Länge der Glasfaserröhrchen (2) an der Innenseite des Schlauches (1) entspricht und/oder
- **dass** die Länge der Glasfaserröhrchen (2) an der Außenseite oder äußeren Mantelfläche (6a) der Hutze (6) der Länge der Glasfaserröhrchen (2) an der Außenseite des Schlauches (1) entspricht, und/oder
- **dass** die Verteilung der Längen der Glasfaserröhrchen (2), insbesondere über die Wanddicke, in dem Schlauch (1) und in der Hutze (6) gleich gewählt ist, und/oder
- **dass** der Schlauch (1) und/oder die Hutze (6), im Bereich (8) einer Krümmung, wobei der Krümmungsradius im Bereich der doppelten bis fünffachen Dicke des Mantels der Hutze (6) liegt und/oder im Verbindungsbereich oder Ansatzbereich der Hutze (6) in den Schlauch (1) und/oder des Anliegens am Schlauch (1), eine um maximal 50 % vergrößerte Wandstärke aufweist.

8. Rohreinlagestück gemäß einem der Ansprüche 4 bis 7, **dadurch gekennzeichnet,**
- **dass** die Wandstärke des Schlauches (1) oder der Hutze (6) im Bereich von 0,5% bis 5%, vorzugsweise 1% bis 3%, des Außendurchmessers des Schlauches (1) bzw. der Hutze (6) liegt, und/oder
- **dass** die Länge der Glasfaserröhrchen (2) in einem Bereich von 1 bis 10 cm liegt und/oder die Wandstärke des Mantels des Schlauches (1) und/oder der Hutze (6) im Bereich zwischen 0.5 bis 0.8 cm, vorzugsweise 0.6 cm bis 0.7cm, liegt, und/oder
- **dass** die Länge der Glasfaserröhrchen (2) im Bereich von 2 % bis 5 %, vorzugsweise 3% bis 3,5%, des Außendurchmessers des Schlauches (1) liegt, und/oder
- **dass** das Verhältnis der Längen der Glasfaserröhrchen (2) an den beiden gegenüberliegenden Mantelflächen (1a, 1b; 6a, 6b) des Schlauches (1) und/oder der Hutze (6) zwischen 1 : 4 und 1 : 2 oder 2 : 1 bis 4 : 1 liegt; wobei insbesondere an der äußeren Mantelfläche (1a, 6a) die längeren Glasfaserröhrchen (2) angeordnet sind, und/oder
- **dass** die Glasfaserröhrchen (2) annähernd parallel zu den Mantelflächen (1a, 1b; 6a, 6b) des Schlauches (1) bzw. der Hutze (6) gelegt bzw. angeordnet sind, und/oder
- **dass** der mittlere Neigungswinkel der Glasfaserröhrchen (2) gegenüber den nächstgelegenen Bereichen der Manteloberfläche kleiner als 10° ist, und/oder
- **dass** die Glasfaserröhrchen (2) ungeordnet bzw. kreuz und quer zueinander liegen, und/oder
- **dass** der Massenanteil und/oder der Volumsanteil der Glasfaserröhrchen (2) im Schlauch (1) und/oder in der Hutze (6) gleich groß ist, und/oder
- **dass** der Massenanteil und/oder der Volumsanteil der Glasfaserröhrchen (2) im Schlauch (1) und/oder in der Hutze (6) homogen verteilt ist, und/oder
- **dass** der Schlauch (1) und die Hutze (6) mit UV-aushärtbarem Harz (3) gebildet sind.

9. Rohr (11) mit einem Schlauch, einer Hutze oder einem Rohreinlagestück gemäß einem der vorangehenden Ansprüche, **dadurch gekennzeichnet, dass**
- die äußere Mantelfläche des Schlauches (1) bündig an der inneren Mantelfläche des Rohrs (11) anliegt, und
- dass an der äußeren Mantelfläche (1a) des Schlauches (1) die längeren Glasfaserröhrchen (2) angeordnet sind.

10. Rohr (11) gemäß Anspruch 9, wobei das Rohr (11) eine Rohrabzweigung aufweist, in der ein weiteres Rohr (16) in das Rohr (11) einmündet, **dadurch gekennzeichnet,**
- **dass** die Hutze (6) in das weitere Rohr (16) eingebracht ist, wobei der hutkrempenförmige Abschnitt der Hutze (6) im Rohr (11) verbleibt,
- **dass** die äußere Mantelfläche (6a) der Hutze (6) an der inneren Mantelflächen (6b) des weiteren Rohres (16) anliegt, und
- **dass** dem weiteren Rohr (16) diejenige Mantelfläche der Hutze (6) zugewandt ist, an welcher die längeren Glasfaserröhrchen (2) angeordnet sind.

11. Verfahren zum Einbringen eines Rohreinlagestücks gemäß einem der Ansprüche 4 bis 8 in den Einmündungsbereich zweier Rohre (11, 16), nämlich eines Rohrs (11) und eines weiteren Rohrs (16), welches in das Rohr (11) einmündet,
**dadurch gekennzeichnet, dass**
- der dem Schlauch (1) ferne Endbereich der Hutze (6) durch die Hutze (6) und die Ausnehmung (5) hindurch in den Schlauch (1) geführt, eingestülpt bzw. invertiert wird,
- das Rohreinlagestück durch das Rohr (11) verschoben bzw. geführt und in den Einmündungsbereich der beiden Rohre (11, 16) gebracht wird, wobei die Ausnehmung (5) im Bereich der Einmündung des weiteren Rohrs (16) in das Rohr (11) zu liegen kommt,
- das Rohreinlagestück mit gleichmäßigem Druck von innen her an das Rohr (11) angedrückt wird, wobei diejenige Mantelfläche des Schlauches (1) am Rohr (11) anliegt, an welcher die längeren Glasfaserröhrchen (2) liegen,
- der dem Schlauch (1) ferne Endbereich der Hutze (6) durch die Ausnehmung (5) und die Hutze (6) aus dem Schlauch (1) herausgestülpt und die Hutze (6) von innen her an das weitere Rohr (16) angedrückt wird, wobei diejenige Mantelfläche der Hutze (6) am weiteren Rohr (16) anliegt, an welcher die längeren Glasfaserröhrchen (2) liegen, und
- das Rohreinlagestück unter Aufrechterhaltung des Drucks mittels UV-Licht ausgehärtet und mit den beiden Rohren (11, 16) verbunden wird.

12. Verfahren gemäß Anspruch 11, **dadurch gekennzeichnet, dass** die Druckbeaufschlagung des Schlauches (1), der Hutze (6) oder des Rohreinlagestücks mittels eines für UV-Licht durchlässigen Ballons erfolgt, welcher insbesondere die Form eines T-Stücks aufweist, wobei der Ballon zumindest teilweise am Rohr (11) und zumindest teilweise am weiteren Rohr (16) anliegt.

## Claims

1. A tube having a tubular sheath formed of a curable, especially UV-curable, resin (3), preferably vinyl ester or polyester, glass fibre tubes (2) which are cut to length being embedded in the resin (3) forming said tube (1), **characterised in that** the glass fibre tubes (2) on the two sheath surfaces (1a, 1b) of said tube (1) have predetermined and different lengths.

2. The tube according to claim 1, **characterised**
- **in that** the shape of the length distribution of said glass fibre tubes (2) is inhomogeneous, especially monotonous, in the intermediate section between the sheath surfaces (1a, 1 b) of said tube (1), and/or
- **in that** said glass fibre tubes (2) are longer in the vicinity of the external sheath surface (1a) than in the vicinity of the internal sheath surface (1b).

3. The tube according to claim 1 or claim 2, **characterised in that** the sheath of said tube (1) has a uniform thickness along its circumference and/or its length, and/or
- **in that** said tube (1) is integrally formed, and/or
- **in that** the rims of said tube (1) are rounded, and/or
- **in that** the thickness of the sheath of the tube (1) is reduced, especially gradually, at at least one end or in the vicinity of the rims, and/or
- **in that** the resin (3) forming said tube (1) is partially cured and has a rubber-like consistency, and/or
- **in that** the resin (3) forming said tube (1) is extensible and **in that** said tube (1) may be extended to up to 170 % of its original size, and/or
- **in that** at least one opening of the tubular sheath is expanded for forming a connecting piece and **in that** the area of said expansion has the form of a brim or is flared.

4. An insert piece for pipes consisting of a tube (1) according to any one of the claims 1 to 3 and a pipe socket (6), i.e. the tube with a brim-like end portion according to claim 9, **characterised in that**
- said pipe socket (6) is connected to said tube (1),
- the brim-like part of said pipe socket (6) lying on the external or internal sheath of said tube (1), with its entire surface and/or largely smoothly and without forming any edges,
- the tubular portion of said pipe socket (6) being disposed at a predetermined, especially right, angle to said tube (1), and
- a recess or cut-out being formed in the portion of said tube (1) which is surrounded by the contact area of the pipe socket (6) and the tube (1) or corresponds to the opening of the pipe socket (6).

5. The insert piece for pipes according to claim 4, **characterised**
- **in that** the end portion of the pipe socket with an extended radius contacts the tube (1), the external sheath surface (6a) of the brim-like portion of the pipe socket (6) is disposed adjacent to the internal sheath surface (1b) of the tube (1), and
- **in that** the end portion of the pipe socket (6) contacting the tube (1) is connected or stuck to the tube (1), especially by means of a resin (7) which is preferably thermosetting.

6. The insert piece for pipes according to claim 4 or claim 5, **characterised**
- **in that** the ends of the sheath surfaces of the pipe socket (6) and the borders of the recess (5) of the tube (1) have a decreasing wall thickness or in that their thickness is reduced along the end portion in a way that the surface of said insert piece is almost smooth and without any bumps.

7. The insert piece for pipes according to any one of the claims 4 to 6, **characterised**
- **in that** the sheath surface of the tube (1) at which the shorter glass fibre tubes (2) are disposed is connected to or contacted with the sheath surface of the pipe socket (6) at which the longer glass fibre tubes (2) are disposed, and/or
- **in that** the sheath surface of the tube (1) at which the longer glass fibre tubes (2) are disposed is connected to or contacted with the sheath surface of the pipe socket (6) at which the shorter glass fibre tubes (2) are disposed, and/or
- **in that** the length of the glass fibre tubes (2) at the internal side of the pipe socket (6) corresponds to the length of the glass fibre tubes (2) at the internal side of the tube (1), and/or
- **in that** the length of the glass fibre tubes (2) at the external side or the external sheath surface (6a) of the pipe socket (6) corresponds to the length of the glass fibre tubes (2) at the external side of the tube (1), and/or
- **in that** the distributions of the lengths of the glass fibre tubes (2), especially across the wall thickness, in the tube (1) and in the pipe socket (6) are selected to be equal, and/or
- **in that** the wall thickness of the tube (1) and/or the pipe socket (6) is expanded by a maximum of 50 % in the area (8) of a bend, the bending radius ranging from two to five times the sheath thickness of the pipe socket (6), and/or in the area in which the pipe socket (6) is connected or fitted to the tube (1) and/or in the area in which it is adjacent to the tube (1).

8. The insert piece for pipes according to any one of the claims 4 to 7, **characterised**
- **in that** the wall thickness of the tube (1) or the pipe socket (6) ranges from 0.5 % to 5 %, preferably from 1 % to 3 %, of the outer diameter of the tube (1) or the pipe socket (6), and/or
- **in that** the length of the glass fibre tubes (2) ranges from 1 to 1 cm and/or the wall thickness of the sheath of the tube (1) and/or the wall thickness of the pipe socket (6) range(s) from 0.5 to 0.8 cm, preferably from 0.6 cm to 0.7 cm, and/or
- **in that** the length of the glass fibre tubes (2) ranges from 2 % to 5 %, preferably from 3 % to 3.5 %, of the outer diameter of the tube (1), and/or
- **in that** the ratio of the lengths of the glass fibre tubes (2) at the two opposite sheath surfaces (1a. 1b: 6a, 6b) of the tube (1) and/or the pipe socket (6) ranges from 1:4 to 1:2 or from 2:1 to 4:1, the longer glass fibre tubes (2) being especially disposed at the outer sheath surface (1a, 6a), and/or
- **in that** the glass fibre tubes (2) lie or are disposed approximately parallel to the sheath surfaces (1a, 1b; 6a, 6b) of the tube (1) and the pipe socket (6), and/or
- **in that** the average inclination angle of the glass fibre tubes (2) in relation to the closest areas of the sheath surface is below 10°, and/or
- **in that** the glass fibre tubes (2) are randomly distributed or disposed in a criss-crossed way relative to one another, and/or
- **in that** the percentage by mass and/or the percentage by volume of the glass fibre tubes (2) are equal in the tube (1) and/or in the pipe socket (6), and/or
**in that** the percentage by mass and/or the percentage by volume of the glass fibre tubes (2) is/are distributed homogeneously in the tube (1) and/ or in the pipe socket (6), and/or
- **in that** the tube (1) and the pipe socket (6) are formed of UV curable resin (3).

9. A pipe (11) with a tube, pipe socket and an inlet piece according to any one of the preceding claims, **characterised in that**
- the external sheath surface of the tube (1) is even with the internal sheath surface of said pipe (11), and
- **in that** the longer glass fibre tubes (2) are disposed at the external sheath surface (1a) of the tube (1).

10. The pipe (11) according to claim 9, said pipe (11) having a pipe branch at which a further pipe (16) leads into the pipe (11), **characterised**
- **in that** the pipe socket (6) is inserted into said further pipe (16), the brim-like portion of the pipe socket (6) remaining in the pipe (11),
- **in that** the external sheath surface (6a) of the pipe socket (6) is adjacent to the internal sheath surface (6b) of said further pipe (16), and
- **in that** the sheath surface of the pipe socket (6) at which the longer glass fibre tubes (2) are disposed faces said further pipe (16).

11. A method for inserting an insert piece for pipes according to any one of the claims 4 to 8 into the junction area of two pipes (11, 16), i.e. of a pipe (11) and a further pipe (16) leading into said pipe (11), **characterised**
- **in that** the end portion of the pipe socket (6) remote from the tube (1) is inserted into the tube (1) through the pipe socket (6) and the recess (5) is pushed in and is inverted respectively,
- **in that** the insert piece for pipes is displaced or guided along the pipe (11) and inserted into the junction area of the two pipes (11, 16), the recess (5) being disposed in the area where said further pipe (16) leads into the pipe (11),
- **in that** the insert piece is pressed against the interior of the pipe (11) at a uniform pressure, the sheath surface of the tube (1) at which the longer glass fibre tubes (2) are disposed contacting the pipe (11),
- **in that** the end portion of the pipe socket (6) remote from the tube (1) is inserted into the tube (1) through recess and the pipe socket (6) is pushed out of the tube (1) and the pipe socket (6) is pressed against the interior of said further pipe (16), the sheath surface of the pipe socket (6) at which the longer glass fibre tubes (2) are disposed contacting said further pipe (16), and
- **in that**, maintaining the pressure, said insert piece is cured by means of UV light and connected to the two pipes (11, 16).

12. The method according to claim 11, **characterised in that** the pressure is exerted on the tube (1), the pipe socket (6) or the insert piece for pipes by means of a balloon which is transparent to UV light and especially is shaped in the form of a T-piece, said balloon contacting the pipe (11) at least partially and the further pipe (16) at least partially.

## Revendications

1. Tuyau souple avec une gaine tubulaire, consistant en une résine (3), qui est notamment photodurcissable, de préférence d'ester vinylique ou polyester, des tubes en fibres de verre (2) tronçonnés étant encastrés dans la résine (1) formant ledit tuyau (1), **caractérisé en ce que** les longueurs desdits tubes en fibres de verre (2) aux deux surfaces de la gaine (1a, 1b) dudit tuyau souple (1) sont prédéterminées et différentes.

2. Tuyau souple selon la revendication 1, **caractérisé**
- **en ce que** la distribution des longueurs desdits tubes en fibres de verre (2) est inhomogène, notamment monotone, dans le domaine entre les deux surfaces de la gaine (1a, 1b) dudit tuyau souple, et/ou
- **en ce que** lesdits tubes en fibres de verre (2) dans le domaine de la surface extérieure (1a) de la gaine sont plus longs que ceux dans le domaine de la surface intérieure (1b) de la gaine.

3. Tuyau souple selon la revendication 1 ou 2, **caractérisé en ce que** la gaine dudit tuyau souple (1) a une épaisseur uniforme le long de sa circonférence et/ou sa longueur, et/ou
- **en ce que** ledit tuyau souple (1) est formé d'une seule pièce, et/ou
- **en ce que** les bords dudit tuyau souple (1) sont arrondis, et/ou
- **en ce que** l'épaisseur de la gaine dudit tuyau souple (1) est réduite, notamment graduellement, à au moins un bout ou dans le domaine des bords, et/ou
- **en ce que** la résine (3) formant ledit tuyau souple (1) est partiellement durcie et a une consistance gommeuse, et/ou
- **en ce que** la résine (3) formant ledit tuyau souple (1) est extensible et **en ce que** le tuyau souple (1) peut être étendu à 170 % de sa grandeur originale, et/ou
- **en ce qu'**au moins un orifice de la gaine tubulaire est élargi pour former une pièce de raccordement et **en ce que** la partie élargie a la forme d'un rebord et est évasé.

4. Insertion pour tuyaux consistant d'un tuyau souple (1) selon l'une des revendications 1 à 3 et un piquage (6), plus précisément un tuyau souple avec un bout en forme de rebord selon la revendication 9, **caractérisée en ce que**
- ledit piquage (6) est relié audit tuyau souple (1),
- la partie en forme de rebord dudit piquage (6) étant en contact avec la gaine extérieure ou la gaine intérieure du tuyau souple (1), notamment sur toute sa surface et/ou largement sans arêtes et sans à-coups,
- la partie tubulaire dudit piquage (6) étant disposée à un angle prédéterminé, notamment droit, par rapport au tuyau souple (1), et
- la partie du tuyau souple (1) entourée par le domaine de contact entre le piquage (6) et le tuyau souple (1) et qui correspond à l'orifice du piquage (6) est enlevée ou découpée.

5. Insertion pour tuyaux selon la revendication 4, **caractérisée**
- **en ce que** la portion terminale du piquage à rayon étendu contacte le tuyau souple (1), notamment la surface extérieure (6a) de la gaine de la partie en forme de rebord du piquage (6) contactant la surface intérieure (1b) de la gaine du tuyau souple (1), et
- **en ce que** la portion terminale du piquage (6) contactant le tuyau souple (1) est reliée ou collée au tuyau souple (1), notamment en utilisant une résine (7) qui est, de préférence, thermodurcissable.

6. Insertion pour tuyaux selon la revendication 4 ou 5, **caractérisée**
- **en ce que** l'épaisseur des parois les bouts des surfaces de la gaine du piquage (6) et la bordure du creux (5) du tuyau souple (1) diminue et est réduite vers les bords, ainsi que la surface de ladite insertion pour tuyaux est approximativement lisse et sans bosses.

7. Insertion pour tuyaux selon la revendication 4 ou 6, **caractérisée**
- **en ce que** la surface de la gaine du tuyau souple (1) où les tubes (2) en fibres de verre plus courts sont disposés est reliée à ou contacte la surface de la gaine du piquage (6) où les tubes (2) en fibres de verre plus longs sont disposés, et/ou
- **en ce que** la surface de la gaine du tuyau souple (1) où les tubes (2) en fibres de verre plus longs sont disposés est reliée à ou contacte la surface (6a, 6b) de la gaine du piquage (6) où les tubes (2) en fibres de verre plus courts sont disposés, et/ou
- **en ce que** la longueur des tubes (2) en fibres de verre à l'intérieur du piquage (6) correspond à la longueur des tubes (2) en fibres de verre à l'intérieur du tuyau souple (1), et/ou
- **en ce que** la longueur des tubes (2) en fibres de verre à l'extérieur ou à la surface extérieure du piquage (6) correspond à la longueur des tubes (2) en fibres de verre à l'extérieur du tuyau souple (1), et/ou
- **en ce que** la distribution des longueurs des tubes (2) en fibres de verre, notamment à travers l'épaisseur de la paroi, dans le tuyau (1) est sélectée pour correspondre à celle dans le piquage (6), et/ou
- **en ce que** l'épaisseur de la paroi du tuyau souple (1) et/ou du piquage (6) est élargie par 50 % au maximum dans le domaine (8) d'une courbure, le rayon de courbure allant de deux à cinq fois l'épaisseur de la gaine du piquage (6), et/ou dans le domaine où le piquage est relié ou joint au tuyau souple (1) et/ou dans le domaine de contact avec le tuyau souple (1).

8. Insertion pour tuyaux selon l'une des revendications 4 à 7, **caractérisée**
- **en ce que** l'épaisseur de la paroi du tuyau souple (1) ou du piquage (6) va de 0,5 à 5 %, de préférence de 1 à 3 %, du diamètre extérieur du tuyau souple (1) et du piquage (6), et/ou
- **en ce que** la longueur des tubes (2) en fibres de verre va de 1 à 10 cm et/ou en ce que l'épaisseur de la gaine du tuyau souple (1) et/ou du piquage (6) va de 0,5 à 0,8 cm, de préférence de 0,6 à 0,7 cm, et/ou
- **en ce que** la longueur des tubes (2) en fibres de verre va de 2 à 5 %, de préférence de 3 à 3,5 %, du diamètre extérieur du tuyau souple (1), et/ou
- **en ce que** le rapport des longueurs des tubes (2) en fibres de verre aux deux surfaces opposées (1a, 1b; 6a, 6b) de la gaine du tuyau souple (1) et/ou du piquage (6) va de 1:4 à 1:2 ou de 2:1 à 4:1, les tubes (2) en fibres de verre plus longs étant disposés notamment à la surface extérieure (1a, 6a) de la gaine, et/ou
- **en ce que** les tubes (2) en fibres de verre sont placés ou disposés approximativement parallèle aux surfaces (1a, 1b; 6a, 6b) de la gaine du tuyau souple (1) et du piquage (6), et/ou
- **en ce que** l'angle moyen d'inclinaison des tubes (2) en fibres de verre par rapport aux parties les plus proches de la surface de la gaine est moins de 10°, et/ou
- **en ce que** les tubes (2) en fibres de verre sont distribués au hasard et dans tous les sens l'un par rapport à l'autre, et/ou
- **en ce que** le pourcentage en masse et/ou le pourcentage en volume des tubes (2) en fibres de verre dans le tuyau souple (1) et/ou dans le piquage (6) sont égaux, et/ou
- **en ce que** le pourcentage en masse et/ou le pourcentage en volume des tubes (2) en fibres de verre dans le tuyau souple (1) et/ou dans le piquage (6) sont distribués de manière homogène, et/ou
- **en ce que** le tuyau souple (1) et le piquage (6) consistent en une résine (3) durcissable par des rayons UV.

9. Tuyau (11) avec un tuyau souple, un piquage ou une insertion pour tuyaux selon l'une des revendications précédentes, **caractérisé en ce que**
- la surface extérieure de la gaine du tuyau souple (1) forme une surface affleurée avec la surface intérieure de la gaine du tuyau (11), et
- **en ce que** les tubes (2) en fibres de verre plus longs sont disposés à la surface extérieure (1a) de la gaine du tuyau souple (1).

10. Tuyau (11) selon la revendication 9, le tuyau (11) ayant un raccord tubulaire dans lequel un autre tuyau (16) aboutit audit tuyau (11), **caractérisé**
- **en ce que** le piquage (6) est introduit dans ledit autre tuyau (16), la partie en forme de rebord du piquage (6) restant dans le tuyau (11),
- **en ce que** la surface extérieure (6a) de la gaine du piquage (6) contacte la surface intérieure (6b) de la gaine dudit autre tuyau (16), et
- **en ce que** ledit autre tuyau (16) est orienté vers la surface de la gaine du piquage (6) où les tubes (2) en fibres de verre plus longs sont disposés.

11. Procédé pour introduire une insertion pour tuyaux selon l'une des revendications 4 à 8 à la jonction de deux tuyaux (11, 16), plus précisément d'un tuyau (11) et d'un autre tuyau (16) qui aboutit au tuyau (11), **caractérisé**
- **en ce que** la portion terminale du piquage (6) qui est éloignée du tuyau souple (1) est introduite dans le tuyau souple (1) à travers le piquage (6) et le creux (5), retournée et invertie respectivement,
**en ce que** l'insertion pour tuyaux est déplacée et conduite à travers le tuyau (11) et introduite à la jointe des deux tuyaux (11, 16), le creux (5) étant disposé dans le domaine où l'autre tuyaux (16) aboutit au tuyau (11),
- **en ce que** l'insertion est pressée contre le tuyau (11) de l'intérieur avec une pression uniforme, la surface de la gaine du tuyau souple (1) où les tubes (2) en fibres de verre sont disposés contactant le tuyau (11),
- **en ce que** la portion terminale du piquage (6) qui est éloignée du tuyau souple (1) est conduite à travers le creux (5) et le piquage (6) et dépasse le tuyau souple (1) et en ce que le piquage (6) est pressé contre l'autre tuyau (16) de l'intérieur, la surface de la gaine du piquage (6) où les tubes (2) en fibres de verre sont disposés contactant l'autre tuyau (16), et
- **en ce que** l'insertion pour tuyaux est durcie par des rayons UV en maintenant la pression et est reliée aux deux tuyaux (11, 16),

12. Procédé selon la revendication 11, **caractérisé en ce que** le tuyau souple (1), le piquage (6) ou l'insertion pour tuyaux sont pressurisés par un ballon perméable à la lumière UV qui a la forme d'une pièce en T, le ballon contactant le tuyau (11) au moins partiellement et l'autre tuyau (16) au moins partiellement.
